# EUROPÄISCHE PATENTSCHRIFT

(11) **EP 3 616 988 B1**
(45) Veröffentlichungstag und Bekanntmachung des Hinweises auf die Patenterteilung: **31.05.2023**
(21) Anmeldenummer: 18190887.2
(22) Anmeldetag: 27.08.2018
(51) Int. Cl.: B60Q 1/00, B60R 13/00, F21S 43/251, F21S 43/31, F21S 43/33, B60Q 1/38, F21W 104/00, F21W 103/20, F21W 103/55

(54) **BELEUCHTUNGSVORRICHTUNG FÜR EIN PERSONEN- UND/ODER GÜTERTRANSPORTMITTEL, VERKLEIDUNGSBAUTEIL FÜR EIN PERSONEN- UND/ODER GÜTERTRANSPORTMITTEL MIT EINER DERARTIGEN BELEUCHTUNGSVORRICHTUNG SOWIE EIN PERSONEN- UND/ODER GÜTERTRANSPORTMITTEL MIT EINEM SOLCHEN VERKLEIDUNGSBAUTEIL**
ILLUMINATION DEVICE FOR A PASSENGER AND/OR GOODS TRANSPORT MEANS, CLADDING COMPONENT FOR A PASSENGER AND/OR GOODS TRANSPORT AGENTS WITH SUCH AN ILLUMINATION DEVICE, AND A PASSENGER AND/OR GOODS TRANSPORT MEANS WITH SUCH A CLADDING COMPONENT
DISPOSITIF D'ÉCLAIRAGE POUR UN MOYEN DE TRANSPORT DE PERSONNES ET / OU MARCHANDISES, COMPOSANT D'HABILLAGE POUR UN MOYEN DE TRANSPORT DE PERSONNES ET / OU MARCHANDISES DOTÉ D'UN TEL DISPOSITIF D'ÉCLAIRAGE AINSI QUE MOYEN DE TRANSPORT DE PERSONNES ET / OU MARCHANDISES DOTÉ D'UN TEL COMPOSANT D'HABILLAGE

(43) Veröffentlichungstag der Anmeldung: 04.03.2020
(73) Patentinhaber: Motherson Innovations Company Limited, London EC2N 2AX (GB)
(72) Erfinder: SEPP, Benjamin, 77723 Gengenbach (DE)
(74) Vertreter: Westphal, Mussgnug & Partner Patentanwälte mbB

(56) Entgegenhaltungen:
- WO-A1-2017/092844
- WO-A2-2016/166193
- CN-A- 103 994 387
- DE-A1-102009 053 571
- FR-A1- 3 055 690
- JP-A- 2009 043 488
- JP-A- 2015 209 104
- US-A1- 2015 258 931

## Beschreibung

Die vorliegende Erfindung betrifft eine Beleuchtungsvorrichtung für ein Personen- und/oder Gütertransportmittel. Weiterhin betrifft die Erfindung ein Verkleidungsbauteil für ein Personen- und/oder Gütertransportmittel mit einer derartigen Beleuchtungsvorrichtung sowie ein Personen- und/oder Gütertransportmittel mit einem solchen Verkleidungsbauteil.

Das Personen- und/oder Gütertransportmittel ist insbesondere als Fahrzeug ausgeführt, kann aber auch ein Schiff, ein Flugzeug, ein Zug oder dergleichen sein. Wenn im Folgenden die Erfindung in Bezug auf Fahrzeuge erläutert wird, gelten die Ausführungen gleichermaßen auch für andere Personen- und/oder Gütertransportmittel wie Schiffe, Flugzeuge, Züge oder dergleichen.

Beleuchtungsvorrichtungen werden bei nahezu allen Personen- und/oder Gütertransportmittel eingesetzt, um anderen Verkehrsteilnehmern auf die eigene Anwesenheit hinzuweisen und um Kollisionen zu vermeiden. Insbesondere bei Fahrzeugen dienen die Beleuchtungsvorrichtungen auch dazu, die unmittelbare Umgebung im Dunkeln auszuleuchten. Unter einer Beleuchtungsvorrichtung soll im Folgenden insbesondere eine Beleuchtungsvorrichtung verstanden werden, welche Licht in die Umgebung des Personen- und/oder Gütertransportmittels abgibt und welche nicht zur Beleuchtung des Innenraums des Personen-und/oder Gütertransportmittels dient. Die hier besonders relevanten Beleuchtungsvorrichtungen können daher auch als externe Beleuchtungsvorrichtungen oder als Umfeld-Beleuchtungsvorrichtungen bezeichnet werden. Daher sind die Beleuchtungsvorrichtungen an Oberflächen des Personen-und/oder Gütertransportmittels angeordnet, die zumindest temporär nach außen weisen. Temporär nach außen weisende Beleuchtungsvorrichtungen können beispielsweise in den Türen, Türschwellern oder Heckklappen angeordnet sein und nur dann nach außen weisen, wenn die Türen oder Heckklappen geöffnet sind. Dann dienen die temporär nach außen weisenden Beleuchtungsvorrichtungen zur Beleuchtung des unmittelbaren Umfelds des Personen-und/oder Gütertransportmittels. Sind die Türen und Heckklappen geschlossen, sind die temporär nach außen weisenden Beleuchtungsvorrichtungen üblicherweise ausgeschaltet. Selbst wenn sie eingeschaltet wären, könnten sie aber den Innenraum nicht beleuchten, da sie von benachbarten Karosserieteilen verdeckt sind und ihr Licht nicht in den Innenraum gelangen kann. Beleuchtungsvorrichtungen wie in der EP 3 184 363 A1 offenbart betreffen daher nicht die hier vorgestellten Beleuchtungsvorrichtungen. Externe Beleuchtungsvorrichtungen sind beispielsweise aus der WO 2013/113728 A1 bekannt.

Weitere Beleuchtungsvorrichtungen sind aus der FR 3 055 690 A1, der WO 2016/166 193 A2, der JP 2015 209 104 A, der CN 103 994 387 A, der US 2015/258 931 A1, der WO 2017/092 844 A1, der JP 2009 043 488 A und der DE 10 2009 053 571 A1 bekannt.

Insbesondere bei Fahrzeugen werden die Beleuchtungsvorrichtungen immer mehr zu einem prägenden Designelement, über welches eine markenspezifische Individualisierung gegenüber Fahrzeugen eines anderen Herstellers möglich wird. Allerdings ist die Gestaltungsfreiheit bei den Beleuchtungsvorrichtungen bislang vergleichsweise stark eingeschränkt, so dass sie nicht an beliebigen Stellen insbesondere der externen Verkleidungsbauteile wie Stoßfänger angeordnet werden können. Ein wesentlicher Grund hierfür ist die Tatsache, dass die Verkleidungsbauteile in vielen Fällen eine komplexe Oberflächenwölbung aufweisen, die mit den bekannten Beleuchtungsvorrichtungen nicht oder nur mit sehr großem Aufwand nachgebildet werden kann.

Darüber hinaus eröffnen sich im Zuge der zunehmenden Elektrifizierung der Fahrzeuge neue Gestaltungsspielräume, bei denen die Beleuchtungsvorrichtungen auf eine bislang nicht bekannte Weise eingesetzt werden können. Da Elektromotoren im Gegensatz zu Verbrennungsmotoren keine Lüftungsgitter mehr benötigen, können die Beleuchtungsvorrichtungen beispielsweise im Kühlergrill angeordnet werden. Sie können aber dennoch vorgesehen sein, insbesondere aus Gestaltungsgründen, unterscheiden sich in diesem Fall aber deutlich von den für Verbrennungsmotoren verwendeten Luftgittern.

Damit die Beleuchtungsvorrichtungen auch bei derartigen Anwendungen zum Einsatz kommen können, müssen Sie an komplexe Oberflächengeometrien anpassbar sein, um nahtlos in die Oberfläche des betreffenden Verkleidungsbauteils des Personen- und/oder Gütertransportmittels oder in die Oberfläche des Personen- und/oder Gütertransportmittels selbst integriert werden zu können, wobei die Beleuchtungsvorrichtungen selbst nur geringen Bauraum benötigen sollen. Bekannte Beleuchtungsvorrichtungen können diese Anforderungen nicht oder nicht mit vertretbarem Aufwand erfüllen.

Aufgabe einer Ausführungsform der vorliegenden Erfindung ist es, eine Beleuchtungsvorrichtung für ein Personen- und/oder Gütertransportmittel anzugeben, mit welcher es mit einfachen und kostengünstigen Mitteln möglich ist, komplexe Oberflächengeometrien nachzubilden, wobei die Beleuchtungsvorrichtung selbst nur einen geringen Bauraum einnehmen soll. Des Weiteren liegt einer Ausbildung und einer Ausgestaltung der vorliegenden Erfindung die Aufgabe zugrunde, ein Verkleidungsbauteil mit einer derartigen Beleuchtungsvorrichtung sowie ein Personen- und/oder Gütertransportmittel mit einem derartigen Verkleidungsbauteil zu schaffen.

Diese Aufgabe wird mit den in den Ansprüchen 1, 14 und 15 angegebenen Merkmalen gelöst. Vorteilhafte Ausführungsformen sind Gegenstand der Unteransprüche.

Eine Ausführungsform der Erfindung betrifft eine Beleuchtungsvorrichtung für ein Personen- und/oder Gütertransportmittel, umfassend ein erstes Tragelement, ein transparentes zweites Tragelement, welches mit dem ersten Tragelement unter Ausbildung eines Hohlraums verbunden ist, und zumindest eine Lichtquelle zum Bereitstellen von Licht im Hohlraum, wobei das erste Tragelement eine zum zweiten Tragelement hinweisende erste innere Oberfläche und das zweite Tragelement eine zum ersten Tragelement hinweisende zweite innere Oberfläche aufweist, die erste innere Oberfläche reflektierend ist oder auf der ersten inneren Oberfläche eine reflektierende Beschichtung aufgebracht ist und auf der zweiten inneren Oberfläche eine teilweise reflektierende, transparente Beschichtung aufgebracht ist.

Vorschlagsgemäß wird angestrebt, die erste innere Oberfläche so auszugestalten, dass so viel Licht wie möglich reflektiert wird, vorzugsweise das Licht vollständig zu reflektieren. Unter einer teilweise reflektierenden, transparenten Beschichtung soll eine Beschichtung verstanden werden, bei der ein Teil des Lichts reflektiert wird, gleichzeitig jedoch der andere Teil die Beschichtung durchdringen kann. Aufgrund der vorschlagsgemäßen Ausgestaltung der Beleuchtungsvorrichtung wird zumindest ein Teil des in den Hohlraum eingebracht Lichts zwischen der ersten inneren Oberfläche und der zweiten inneren Oberfläche hin und her reflektiert. Hierdurch wird eine Tiefenwirkung erzeugt, auch als Unendlichkeitseffekt bezeichnet, obwohl die Beleuchtungsvorrichtung und insbesondere der Hohlraum sehr flach ausgestaltet werden können. Die Beleuchtungsvorrichtung kann daher als Sandwich aufgebaut sein. Aufgrund der Möglichkeit, die Beleuchtungsvorrichtung sehr flach auszugestalten und dennoch eine gute Ausleuchtung bereitzustellen, kann die vorschlagsgemäße Beleuchtungsvorrichtung auch an Stellen insbesondere eines Fahrzeugs angebracht werden, an denen es bislang nicht oder nur mit einem sehr großen Aufwand möglich war.

Sowohl die reflektierende Beschichtung als auch die teilweise reflektierende, transparente Beschichtung können durch spiegelnde oder teilweise spiegelnde, transparente Folien erzeugt werden, die auch hinterspritzt werden können. Alternativ können die Beschichtungen mit Sputtern, PVD ("Physical Vapor Deposition"), CVD ("Chemical Vapor Deposition") oder anderen Beschichtungsverfahren auf das erste Tragelement und das zweite Tragelement aufgebracht werden. Das erste Tragelement und das zweite Tragelement können miteinander verklebt, verclipst, verschraubt, vernietet oder verschweißt werden. Erfindungsgemäß ist die erste innere Oberfläche drehbar. Hierzu ist zumindest ein Teil des ersten Tragelements drehbar gelagert und wird mittels eines Aktuators gedreht . Hierdurch lassen sich dynamische Lichteffekte erzielen.

Nach Maßgabe einer weiteren Ausführungsform ist die Lichtquelle im Hohlraum angeordnet. Aufgrund der Möglichkeit, die Lichtquelle im Hohlraum anzuordnen, kann die vorschlagsgemäße Beleuchtungsvorrichtung sehr kompakt gehalten werden. Darüber hinaus müssen keine Vorkehrungen getroffen werden, dass von ihr bereitgestellte Licht in den Hohlraum einzuleiten. Die Komplexität der Beleuchtungsvorrichtung gemäß dieser Ausführungsform wird somit gering gehalten.

In einer weitergebildeten Ausführungsform kann die Lichtquelle außerhalb des Hohlraums angeordnet sein und die Beleuchtungsvorrichtung einen Einleitungsabschnitt zum Einleiten des von der Lichtquelle bereitgestellten Lichts in den Hohlraum aufweisen. Zwar muss der Einleitungsabschnitt vorgesehen werden, um das von der Lichtquelle bereitgestellte Licht in den Hohlraum einleiten zu können, allerdings kann der Abstand zwischen der ersten inneren Oberfläche und der zweite inneren Oberfläche sehr gering gehalten werden, weil der Hohlraum nicht so groß bemessen werden muss, dass die Lichtquelle dort angeordnet werden kann. Die Beleuchtungsvorrichtung kann im Bereich der beiden Tragelemente sehr flach und damit raumsparend ausgeführt werden.

Bei einer weitergebildeten Ausführungsform kann der Einleitungsabschnitt als ein Durchbruch im ersten Tragelement ausgebildet sein. In dieser Ausführungsform kann der Einleitungsabschnitt auf technisch sehr einfache und daher kostengünstige Weise bereitgestellt werden.

Bei einer weiteren Ausführungsform kann der Einleitungsabschnitt als ein Lichtleiter ausgebildet sein. Mit Lichtleiter ist es möglich, die Lichtquelle auch in größerem Abstand zu den beiden Tragelementen und zum Hohlraum anzuordnen. Folglich ergibt sich die Möglichkeit, die Lichtquelle dort anzuordnen, wo es sich aus fertigungstechnischer Sicht anbietet.

Eine weitergebildete Ausführungsform zeichnet sich dadurch aus, dass im Hohlraum eine Anzahl von Verbindungsstegen angeordnet ist, mit denen das erste Tragelement mit dem zweiten Tragelement verbunden ist. Die Verbindungsstege wirken als Versteifung der Beleuchtungsvorrichtung im Bereich der beiden Tragelemente, so dass diese großflächig ausgeführt werden können, ohne ihre Stabilität zu verlieren und ohne einen erhöhten Bauraum zu benötigen.

Nach Maßgabe einer weiteren Ausführungsform ist zumindest eine Lichtquelle an einem der Verbindungsstege angeordnet. Hierdurch ist es möglich, die Lichtquellen verteilt innerhalb des Hohlraums anzuordnen, wodurch eine gleichmäßigere Ausleuchtung erzielt werden kann.

Eine weitere Ausführungsform zeichnet sich dadurch aus, dass die erste innere Oberfläche eine Wölbung aufweist. Die Wölbung kann sowohl konvex als auch konkav sein. Die Wölbung soll dabei so ausgestaltet sein, dass das Licht zielgerichtet und wahrnehmbar gestreut oder fokussiert wird. Hierdurch lässt sich die Ausleuchtung gezielt verändern und insbesondere vergleichmäßigen. Es kann aber auch gewollt sein, bestimmte Lichtintensitätsveränderungen einzustellen, was mit der Wölbung ermöglicht wird.

Nach einer weiteren Ausführungsform kann die Wölbung veränderbar sein. Beispielsweise kann das erste Tragelement mit einer gewissen Flexibilität versehen sein und mit einem Aktuator zusammenwirken, welcher das erste Tragelement zum Bereitstellen der konvexen oder konkaven Wölbung entsprechend verformt. Hierdurch lassen sich dynamische Lichteffekte erzeugen.

Eine weitergebildete Ausführungsform zeichnet sich dadurch aus, dass die erste innere Oberfläche zur zweiten inneren Oberfläche hin und von dieser weg bewegbar ist. Hierzu kann zumindest ein Teil des ersten Tragelements bewegbar gelagert und mittels eines Aktuators bewegbar sein. Auch hierdurch lassen sich dynamische Lichteffekte erzielen.

Bei einer weiteren Ausführungsform kann das zweite Tragelement eine vom ersten Tragelement wegweisende äußere Oberfläche aufweisen, auf welcher eine transparente Beschichtung aufgebracht ist. Diese transparente Beschichtung kann beispielsweise so ausgestaltet sein, dass sie steinschlag-, kratz- und UVbeständig ist. Zudem kann mittels der transparenten Beschichtung, die auch als Folie ausgestaltet sein kann, eine Class-A-Oberfläche bereitgestellt werden. Mit der transparenten Beschichtung können Lichtstreuungen gezielt beeinflusst werden, beispielsweise mit Bereichen der äußeren Oberfläche des zweiten Tragelements, die keine transparente Beschichtung aufweist. Zudem können Gravuren oder weitere Beschichtungen auf der äußeren Oberfläche und/oder der transparenten Beschichtung aufgetragen werden. Optional kann vorgesehen werden, dass auf die äußere Oberfläche von außen eine Antireflexbeschichtung oder Folie aufgetragen wird, um eine Blendung zu verhindern. Weiterhin kann vorgesehen werden, dass die transparente Beschichtung auf Anforderungen der Exterieurbauteile angepasst ist. Die transparente Beschichtung kann beispielsweise als ein transparenter Klarlack ausgebildet sein.

Gemäß einer weitergebildeten Ausführungsform bestehen das erste Tragelement und das zweite Tragelement aus einem spritzgussfähigen Kunststoff. Hierdurch lässt sich die vorschlagsgemäße Beleuchtungsvorrichtung kostengünstig in großen Stückzahlen bereitstellen, so dass die vorschlagsgemäße Beleuchtungsvorrichtung serientauglich herstellbar ist. Zudem können die Beschichtungen beispielsweise durch Folienhinterspritzen bereits im Spritzgusswerkzeug bereitgestellt werden. Das erste Tragelement und das zweite Tragelement können durch Aufspritzen oder Hinterspritzen miteinander verbunden werden. Zudem kann eines der Tragelemente um das andere der Tragelemente umspritzt werden.

Nach Maßgabe einer weiteren Ausführungsform ist der Kunststoff eingefärbt und/oder getönt. Aufgrund der Einfärbung und/oder der Tönung des Kunststoffs wird der Transmissionsgrad verringert, wodurch beispielsweise ein Black-Panel-Effekt erzeugt werden kann, wobei der Black-Panel-Effekt sinngemäß auch mit anderen Farben erzeugt werden kann. Die Lichtquellen sind im ausgeschalteten Zustand aufgrund des verringerten Transmissionsgrad von außen nicht sichtbar.

Eine Ausbildung der Erfindung betrifft ein externes Verkleidungsbauteil für ein Personen- und/oder Gütertransportmittel, umfassend zumindest eine Beleuchtungsvorrichtung nach einer der vorherigen Ausführungsformen.

Eine Ausgestaltung der Erfindung betrifft ein Personen- und/oder Gütertransportmittel, umfassend zumindest ein Verkleidungsbauteil nach der zuvor beschriebenen Ausbildung und/oder zumindest eine Beleuchtungsvorrichtung nach einer der vorherigen Ausführungsformen.

Die technischen Effekte und Vorteile, die sich mit dem vorschlagsgemäßen externen Verkleidungsbauteil und dem vorschlagsgemäßen Personen- und/oder Gütertransportmittel erreichen lassen, entsprechen denjenigen, die für die vorliegende Beleuchtungsvorrichtung erörtert worden sind. Wie bereits erwähnt, ermöglicht es die vorliegende Beleuchtungsvorrichtung, mit einfachen und kostengünstigen Mitteln komplexe Oberflächengeometrien nachzubilden, eine aufgrund des Tiefeneffekts weitläufige Ausleuchtung bereitzustellen und selbst nur einen geringen Bauraum einzunehmen. Folglich lassen sich auch externe Verkleidungsbauteile mit komplexen Oberflächengeometrien beleuchten, wobei das erste Tragelement nahtlos oder nahezu nahtlos in die Oberfläche des externe Verkleidungsbauteils integriert werden kann. Es ist daher möglich, beliebige Außenoberflächen des Personen- und/oder Gütertransportmittels zu beleuchten, ohne seine Außenkontur verändern zu müssen. Dabei kann die Beleuchtungsvorrichtung wahlweise in eine der externe Verkleidungsbauteile oder in eine sonstige Oberfläche des Personen- und/oder Gütertransportmittels integriert werden. So kann die vorschlagsgemäße Beleuchtungsvorrichtung in die Stoßfänger, in die Heckklappe oder in weitere Karosserieteile integriert oder anstelle von Kühlungs- oder Lüftungsgittern verwendet werden, die bei Elektrofahrzeugen nicht mehr oder zumindest nicht mehr in der bislang verwendeten Ausgestaltung benötigt werden. Die äußere Oberfläche der vorschlagsgemäßen Beleuchtungsvorrichtung stellt gleichzeitig die Außenfläche des Personen- und/oder Gütertransportmittels, insbesondere des Fahrzeugs dar. Das Design insbesondere des Fahrzeugs kann freier gestaltet und damit verbessert werden. Zudem werden eine Tiefenwirkung und eine hieraus resultierende weitläufigere Ausleuchtung trotz eines schmalen und flachen Aufbaus der Beleuchtungsvorrichtung erreicht.

Beispielhafte Ausführungsformen der Erfindung werden im Folgenden unter Bezugnahme auf die beigefügten Zeichnungen näher erläutert. Es zeigen
- Figuren 1 bis 6: verschiedene nicht erfindungsgemäße Ausführungsbeispiele einer Beleuchtungsvorrichtung, jeweils anhand von prinzipiellen Schnittdarstellungen,
- Figur 7: ein erfindungsgemäßes Ausführungsbeispiel einer Beleuchtungsvorrichtung,
- Figur 8: ein Ausführungsbeispiel der Beleuchtungsvorrichtung, und
- Figur 9: eine prinzipielle Draufsicht auf ein Personen- und/oder Gütertransportmittel, welches mit den in den Figuren 1 bis 8 dargestellten Beleuchtungsvorrichtungen ausgestattet ist.

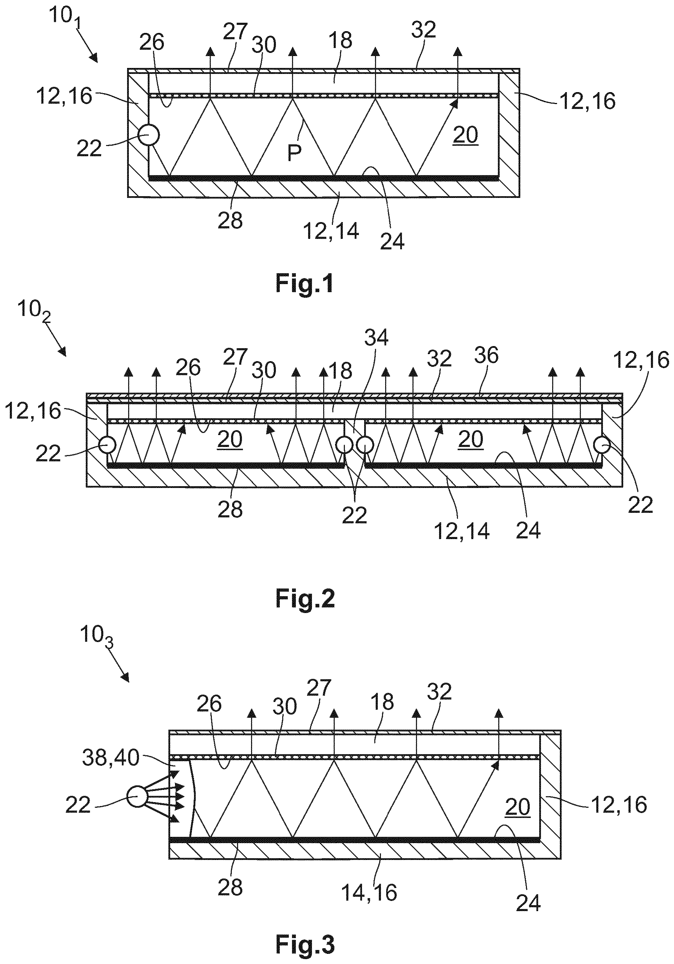

In Figur 1 ist ein erstes Ausführungsbeispiel einer Beleuchtungsvorrichtung 10₁ anhand einer prinzipiellen Schnittdarstellung gezeigt. Die Beleuchtungsvorrichtung 10₁ weist ein lichtundurchlässiges erstes Tragelement 12 auf, welches in etwa U-förmig ausgestaltet ist und einen Basisabschnitt 14 und zwei hierzu senkrecht verlaufende Schenkel 16 umfasst. Zwischen den beiden Schenkeln 16 ist ein flächiges transparentes zweites Tragelement 18 angeordnet und mit dem ersten Tragelement 12 verbunden, beispielsweise durch Schweißen, Umspritzen, Verclipsen, Verschrauben, Vernieten oder Verkleben. Die beiden Tragelemente 12, 18 bilden einen Hohlraum 20 aus. An einem der Schenkel 16 ist eine Lichtquelle 22 befestigt, die teilweise in den Hohlraum 20 hineinragt.

Der Basisabschnitt 14 des ersten Tragelements 12 bildet eine zum zweiten Tragelement 18 hinweisende erste innere Oberfläche 24 aus. Das zweite Tragelement 18 bildet eine zum ersten Tragelement 12 hinweisende zweite innere Oberfläche 26 und eine vom ersten Tragelement 12 wegweisende äußere Oberfläche 27.

Auf der ersten inneren Oberfläche 24 ist eine reflektierende Beschichtung 28 aufgebracht. Nicht dargestellt ist der Fall, dass die erste innere Oberfläche 24 selbst reflektierend ausgebildet ist. Die reflektierenden Eigenschaften der ersten inneren Oberfläche 24 können beispielsweise mit einer Schwarz-Hochglanz-Oberfläche (Klavierlackoptik) erzeugt werden. Solche Oberflächen können beispielsweise durch das Überspritzten oder Überfluten von schwarzen oder getönten Kunstoffen mit einem transparenten Kunststoff, wie PMMA (Polymethylmethacrylat) oder PC (Polycarbonat), gefertigt werden. Die reflektierende Eigenschaft kann aber auch ohne Überspritzen durch einen schwarzen oder getönten Kunststoff erzeugt werden (beispielsweise getöntes PC oder PMMA in Hochglanzoptik), wodurch die Beschichtung oder das Folieren der ersten inneren Oberfläche 24 eingespart werden kann.

Auf der zweiten inneren Oberfläche 26 ist eine teilweise reflektierende, transparente Beschichtung 30 und auf der äußeren Oberfläche 27 eine transparente Beschichtung 32 aufgebracht. Die transparente Beschichtung 32 ist nicht zwingend erforderlich und wird insbesondere dann eingesetzt, wenn der Kunststoff des zweiten Tragelements 18 selbst nicht die erforderlichen Eigenschaften als Exterieurbauteil insbesondere hinsichtlich Steinschlag-, Kratz- und UV-Beständigkeit oder hinsichtlich einer Class-A-Oberfläche aufweist.

Aufgrund der Anordnung der reflektierenden Beschichtung 28, der teilweise reflektierenden, transparenten Beschichtung 30 und der transparenten Beschichtung 32 ergibt sich folgender Strahlengang P: Aufgrund der Tatsache, dass die Lichtquelle 22 in den Hohlraum 20 hineinragt, wird Licht im Hohlraum 20 bereitgestellt. Das von der Lichtquelle 22 erzeugte und auf die reflektierende Beschichtung 28 auftreffende Licht wird an der reflektierenden Beschichtung 28 vollständig oder nahezu vollständig zur teilweise reflektierenden, transparenten Beschichtung 30 reflektiert. Ein Teil des Lichts durchdringt die teilweise reflektierende, transparente Beschichtung 30 und verlässt den Hohlraum 20. Anschließend durchdringt dieser Teil das transparente zweite Tragelement 18 und die transparente Beschichtung 32 und verlässt die Beleuchtungsvorrichtung 10₁. Dieser Teil des Lichts ist von außen für einen Benutzer sichtbar. Ein anderer Teil des Lichts wird von der teilweise reflektierenden, transparenten Beschichtung 30 zurück in den Hohlraum 20 zur reflektierenden Beschichtung 28 reflektiert. An der reflektierten Beschichtung 28 wird dieser Teil wie bereits erläutert vollständig oder nahezu vollständig zurück zur teilweise reflektierenden, transparenten Beschichtung 30 reflektiert. Dieser Vorgang wiederholt sich vielfach, wodurch sich die von der Lichtquelle 22 erzeugten Erscheinungen wiederholen und ein Tiefeneffekt erzeugt wird, auch als Unendlichkeitseffekt bezeichnet, obwohl der Abstand zwischen den beiden Tragelementen 12, 18 nur so groß sein muss, dass die Lichtquelle 22 in den Hohlraum 20 hineinragen kann.

Die transparente Beschichtung 32 kann getönt ausgeführt werden, beispielsweise, um einen "Black-Panel-Effekt" zu erzeugen. Vorzugsweise wird der Black-Panel-Effekt dadurch erzeugt, dass der Kunststoff selbst schwarz getönt oder eingefärbt wird (Verringerung der Transmission). Alternativ können andere Farben wie beispielsweise Rot bei Anwendungen im Heckbereich verwendet werden. Auch eine Ausführung mit Folie ist denkbar. Die Lichtquelle 22 ist in diesem Fall im ausgeschalteten Zustand von außen nicht zu erkennen, es erscheint eine homogene schwarze Oberfläche. Alternativ oder kumulativ kann vorgesehen werden, dass auf die äußere Oberfläche 27 eine Antireflexbeschichtung, beispielsweise in Form einer Folie, aufgetragen wird, um eine Blendung zu verhindern.

Die Lichtquelle 22 kann als LED oder OLED ausgeführt sein und über nicht dargestellte Leitungen mit elektrischer Energie versorgt und von einer ebenfalls nicht dargestellten Steuereinheit angesteuert werden. Die Farbe des von der Lichtquelle 22 abgestrahlten Lichts kann verändert werden. Wenn die Lichtquelle 22 als OLED ausgeführt ist, kann diese auf das erste Tragelement 12 aufgedruckt werden, insbesondere dann, wenn das erste Tragelement 12 aus einem spritzgussfähigen Kunststoff besteht. Das erste Tragelement 12 kann aber auch um die als OLED ausgeführte Lichtquelle 22 umspritzt oder die so ausgeführte Lichtquelle 22 auf das erste Tragelement 22 aufgeklebt werden. Wenn die Lichtquelle 22 als LED ausgeführt ist, kann diese auf das erste Tragelement 12 aufgeklebt oder vom ersten Tragelement 12 umspritzt werden.

In Figur 2 ist ein zweites Ausführungsbeispiel der Beleuchtungsvorrichtung 10₂ gezeigt, welche einen Verbindungssteg 34 aufweist. Mit dem Verbindungssteg 34 wird das erste Tragelement 12 mit dem zweiten Tragelement 18 im Hohlraum 20 verbunden. Selbstverständlich können mehrere Verbindungsstege 34 vorgesehen sein, so dass das erste Tragelement 12 und das zweite Tragelement 18 an mehreren Stellen miteinander verbunden werden können. In diesem Fall ist der Verbindungssteg 34 einstückig mit dem ersten Tragelement 12 ausgeführt und dient zur Abstützung des zweiten Tragelements 18. Zudem sind an dem Verbindungssteg 34 insgesamt zwei Lichtquellen 22 angeordnet. Darüber hinaus ist an jedem der Schenkel 16 des ersten Tragelements 12 jeweils eine Lichtquelle 22 befestigt. Die Lichtquellen 22 können einzeln angesteuert werden. Beispielsweisen können sie zeitlich versetzt eingeschaltet werden, so dass Lauflichteffekt erzielt werden kann. Auch können sie in verschiedenen Farben leuchten, so dass sie einmal als Blinker und einmal als Tagfahrlicht fungieren. Verschiedene Beleuchtungsmodi können eingestellt werden.

Auf die transparente Beschichtung 32 ist eine weitere Beschichtung 36 aufgetragen. Die weitere Beschichtung 36 ist transparent und kann als eine Antireflexbeschichtung ausgebildet sein, um eine Blendung zu verhindern. Zudem kann die weitere Beschichtung 36 als ein transparenter Klarlack ausgebildet sein, um die Kratzfestigkeit der Beleuchtungsvorrichtung 10₂ zu erhöhen. Auf die weitere Beschichtung 36 kann dann verzichtet werden, wenn die transparente Schicht 32 die Eigenschaften der weiteren Beschichtung 36 aufweist. Auch kann die weitere Beschichtung 36 so ausgeführt sein, dass die Lichtquellen 22 im ausgeschalteten Zustand von außen nicht sichtbar sind. Hierzu sind Teile der weiteren Beschichtung 36 oder der transparenten Beschichtung 32 undurchsichtig und können so die Lichtquellen 22 maskieren. Die weitere Beschichtung 36 kann auch dazu verwendet werden, um das zweite Tragelement 18 optisch der benachbarten Oberfläche anzupassen.

In Figur 3 ist ein drittes Ausführungsbeispiel der Beleuchtungsvorrichtung 10₃ gezeigt. In diesem Ausführungsbeispiel ist die Lichtquelle 22 außerhalb des Hohlraums 20 angeordnet. Um das von der Lichtquelle 22 bereitgestellte Licht in den Hohlraum 20 einleiten zu können, ist ein Einleitungsabschnitt 38 vorgesehen. Der Einleitungsabschnitt 38 ist als ein Lichtleiter 40 ausgestaltet, welcher einen der Schenkel 16 des ersten Tragelements 12 ersetzt. Wie zu erkennen, ist der Lichtleiter 40 auf seiner zum Hohlraum 20 hinzeigenden Oberfläche insbesondere konvex gewölbt, so dass die Lichtstrahlen zueinander hin gebrochen werden und damit mehr oder weniger gebündelt in den Hohlraum 20 eingeleitet werden. Zudem kann die Oberfläche des Lichtleiters 40 mit hier nicht dargestellten verschiedenen Lichtauskopplungsstrukturen versehen werden, um beispielsweise die Randbereiche der Beleuchtungsvorrichtung 10₃ homogener auszuleuchten. Hierdurch wird erreicht, dass ein möglichst großer Teil des von der Lichtquelle 22 bereitgestellten Lichts in den Hohlraum 20 eingeleitet und somit das Licht effektiv genutzt wird.

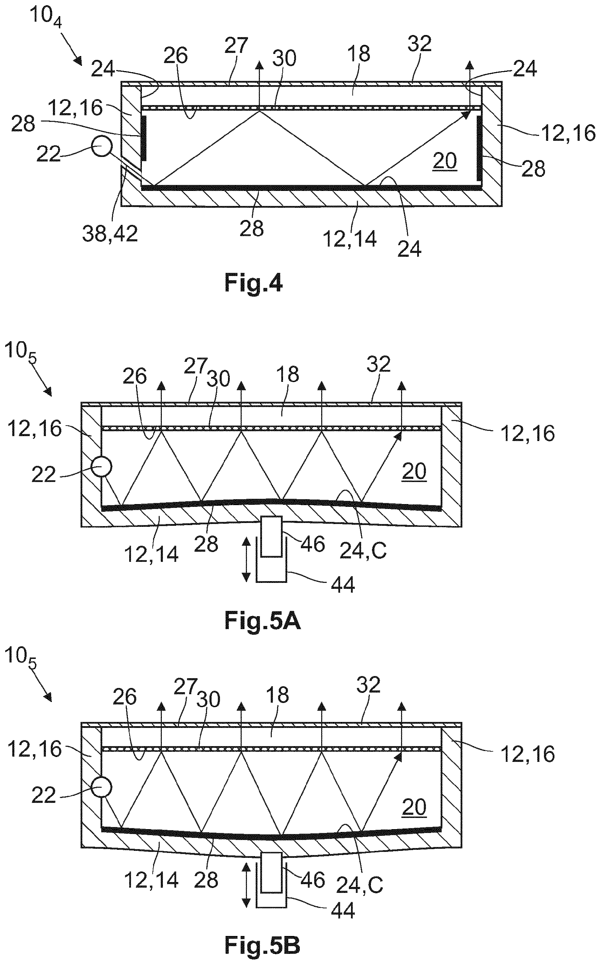

In Figur 4 ist ein viertes Ausführungsbeispiel der Beleuchtungsvorrichtung 10₄ gezeigt. Auch in diesem Ausführungsbeispiel ist die Lichtquelle 22 außerhalb des Hohlraums 20 angeordnet. Der Einleitungsabschnitt 38 ist in diesem Fall als ein Durchbruch 42 in dem benachbart zur Lichtquelle 22 angeordneten Schenkel 16 des ersten Tragelements 12 ausgebildet. Das von der Lichtquelle 22 bereitgestellte Licht durchquert diesen Durchbruch 42 und dringt anschließend in den Hohlraum 20 ein. Weiterhin sind im vierten Ausführungsbeispiel auch die zum Hohlraum 20 hinzeigenden ersten inneren Oberflächen 24 der beiden Schenkel 16 des ersten Tragelements 12 mit der reflektierenden Beschichtung 28 versehen. Das dort auftreffende Licht wird zurück in den Hohlraum 20 geworfen und kann dann den Hohlraum 20 über das transparente zweite Tragelement 18 verlassen. Das Licht wird daher nicht von den Schenkeln 16 absorbiert und geht nicht verloren.

In den Figuren 5A und 5B ist ein fünftes Ausführungsbeispiel der Beleuchtungsvorrichtung 10₅ gezeigt. Die Beleuchtungsvorrichtung 10₅ nach dem fünften Ausführungsbeispiel ist im Wesentlichen so aufgebaut wie die Beleuchtungsvorrichtung 10₁ nach dem ersten Ausführungsbeispiel, allerdings wirkt ein Aktuator 44 mit dem Basisabschnitt 14 des ersten Tragelements 12 auf folgende Weise zusammen. Der Aktuator 44 weist einen senkrecht zum Basisabschnitt 14 axial bewegbaren Stößel 46 auf, der mit dem Basisabschnitt 14 fest verbunden ist. Je nachdem, in welche Richtung der Stößel 46 bewegt wird, verformt er den Basisabschnitt 14 elastisch. Wird der Stößel 46, wie in Figur 5A gezeigt zum zweiten Tragelement 18 hin bewegt, wird das erste Tragelement 12 so verformt, dass die erste innere Oberfläche 24 eine konvexe Wölbung C aufweist. Wenn der Stößel 46, wie in Figur 5B gezeigt, vom zweiten Tragelement 18 weg bewegt wird, wird das erste Tragelement 12 so verformt, dass die erste innere Oberfläche 24 eine konkave Wölbung C aufweist. Hierdurch können dynamische Lichteffekte erzeugt werden.

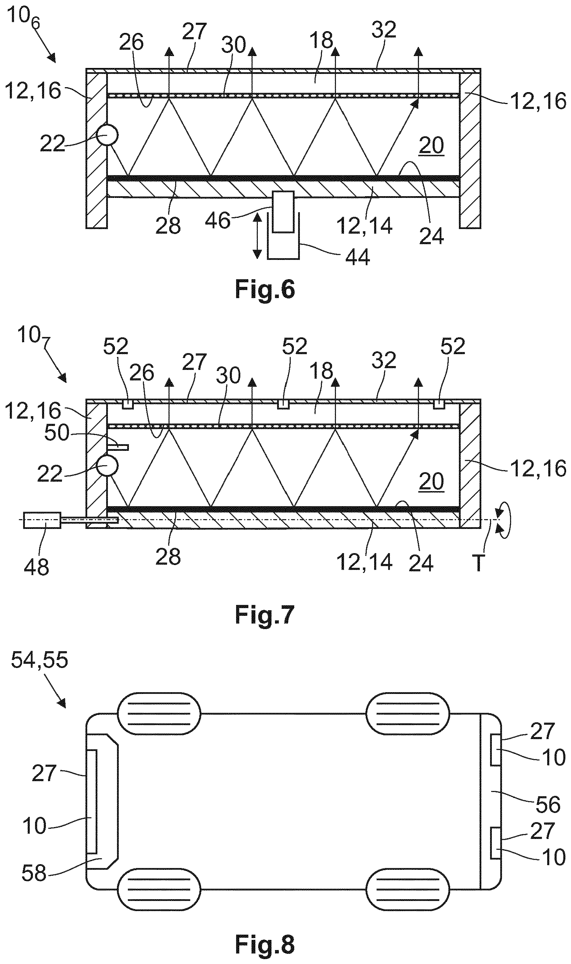

Figur 6 zeigt ein sechstes Ausführungsbeispiel der Beleuchtungsvorrichtung 10s. Im sechsten Ausführungsbeispiel ist der Basisabschnitt 14 des ersten Tragelements 12 axial verschiebbar an den beiden Schenkeln 16 befestigt. Folglich kann der Basisabschnitt 14 zum zweiten Tragelement 18 hin und vom zweiten Tragelement 18 weg verschoben werden. Der für das fünfte Ausführungsbeispiel beschriebene Aktuator 44 kann auch im sechsten Ausführungsbeispiel der Beleuchtungsvorrichtung 10₆ verwendet werden, um den Basisabschnitt 14 zum zweiten Tragelement 18 hin- und von diesem wieder weg zu bewegen. Hierdurch können dynamische Lichteffekte erzeugt werden.

Figur 7 zeigt ein Ausführungsbeispiel einer erfindungsgemäßen Beleuchtungsvorrichtung 10₇. Im siebten Ausführungsbeispiel ist der Basisabschnitt 14 drehbar an den beiden Schenkeln 16 gelagert und kann mit einem Drehaktuator 48 um eine senkrecht zu den beiden Schenkeln 16 des ersten Tragelements 18 verlaufende Drehachse T gedreht werden. Auch hierdurch können dynamische Lichteffekte erzeugt werden. Zudem weist die Beleuchtungsvorrichtung 10₇ nach dem siebten Ausführungsbeispiel eine Blende 50 auf, welche die Lichtquelle 22 so verdeckt, dass sie im ausgeschalteten Zustand von außen nicht sichtbar ist. Darüber hinaus sind auf dem zweiten Tragelement 18 Gravuren 52 vorgesehen, welche die transparente Beschichtung 32 durchdringen und sie im Bereich der Gravuren 52 unterbrechen. Die Gravuren 52 dringen in das zweite Tragelement 18 ein, so dass die Lichtstreuung beeinflusst wird. Das von der Beleuchtungsvorrichtung 10₇ abgestrahlte Licht kann hierdurch mit bestimmten Mustern versehen werden, beispielsweise dem Markenlogo des Herstellers eines Personen- und/oder Gütertransportmittels 54.

In Figur 8 ist ein Personen- und/oder Gütertransportmittel 54 anhand einer prinzipiellen Draufsicht gezeigt, welches als ein Fahrzeug 55 ausgeführt ist und insgesamt drei der erfindungsgemäßen Beleuchtungsvorrichtungen 10 aufweist. Zwei der Beleuchtungsvorrichtungen 10 sind in einem externen Verkleidungsbauteil 56 angeordnet, welches hier als Stoßfänger ausgebildet ist. Eine dritte der Beleuchtungsvorrichtungen 10 ist in der Heckklappe des Fahrzeugs 55 angeordnet. Die äußere Oberfläche 27 der Beleuchtungsvorrichtung 10₁ bildet dabei einen Teil der Oberfläche des externen Verkleidungsbauteils 56 oder der Heckklappe 58. Die äußere Oberfläche 27 schließt sich nahtlos oder nahezu nahtlos an die umgebenden Oberflächen des Fahrzeugs 55 an.

### Bezugszeichenliste

- 10, 10₁ - 10₇: Beleuchtungsvorrichtung
- 12: erstes Tragelement
- 14: Basisabschnitt
- 16: Schenkel
- 18: zweites Tragelement
- 20: Hohlraum
- 22: Lichtquelle
- 24: erste innere Oberfläche
- 26: zweite innere Oberfläche
- 27: äußere Oberfläche
- 28: reflektierende Beschichtung
- 30: teilweise reflektierenden, transparenten Beschichtung
- 32: transparente Beschichtung
- 34: Verbindungssteg
- 36: weitere Beschichtung
- 38: Einleitungsabschnitt
- 40: Lichtleiter
- 42: Durchbruch
- 44: Aktuator
- 46: Stößel
- 48: Drehaktuator
- 50: Blende
- 52: Gravur
- 54: Personen- und/oder Gütertransportmittel
- 55: Fahrzeug
- 56: externes Verkleidungsbauteil
- 58: Heckklappe

- C: Wölbung
- P: Strahlengang
- T: Drehachse

## Patentansprüche

1. Beleuchtungsvorrichtung (10) für ein Personen- und/oder Gütertransportmittel (54), umfassend
- ein erstes Tragelement (12),
- ein transparentes zweites Tragelement (18), welches mit dem ersten Tragelement (12) unter Ausbildung eines Hohlraums (20) verbunden ist, und
- zumindest eine Lichtquelle (22) zum Bereitstellen von Licht im Hohlraum (20), wobei
- das erste Tragelement (12) eine zum zweiten Tragelement (18) hinweisende erste innere Oberfläche (24) und
- das zweite Tragelement (18) eine zum ersten Tragelement (12) hinweisende zweite innere Oberfläche (26) aufweist,
- die erste innere Oberfläche (24) reflektierend ist oder auf der ersten inneren Oberfläche (12) eine reflektierende Beschichtung (28) aufgebracht ist und
- auf der zweiten inneren Oberfläche (26) eine teilweise reflektierende, transparente Beschichtung (30) aufgebracht ist
**dadurch gekennzeichnet, dass** die erste innere Oberfläche (24) drehbar ist, wozu zumindest ein Teil des ersten Tragelements drehbar gelagert ist und mittels eines Aktuators gedreht wird.

2. Beleuchtungsvorrichtung nach Anspruch 1,
**dadurch gekennzeichnet, dass** die Lichtquelle (22) im Hohlraum (20) angeordnet ist.

3. Beleuchtungsvorrichtung nach Anspruch 1,
**dadurch gekennzeichnet, dass** die Lichtquelle (22) außerhalb des Hohlraums (20) angeordnet ist und die Beleuchtungsvorrichtung (10) einen Einleitungsabschnitt (38) zum Einleiten des von der Lichtquelle (22) bereitgestellten Lichts in den Hohlraum (20) aufweist.

4. Beleuchtungsvorrichtung nach Anspruch 3,
**dadurch gekennzeichnet, dass** der Einleitungsabschnitt (38) als ein Durchbruch (42) im ersten Tragelement (12) ausgebildet ist.

5. Beleuchtungsvorrichtung nach Anspruch 3,
**dadurch gekennzeichnet, dass** der Einleitungsabschnitt (38) als ein Lichtleiter (40) ausgebildet ist.

6. Beleuchtungsvorrichtung nach einem der vorherigen Ansprüche,
**dadurch gekennzeichnet, dass** im Hohlraum (20) eine Anzahl von Verbindungsstegen (34) angeordnet ist, mit denen das erste Tragelement (12) mit dem zweiten Tragelement (18) verbunden ist.

7. Beleuchtungsvorrichtung nach Anspruch 6,
**dadurch gekennzeichnet, dass** zumindest eine Lichtquelle (22) an einem der Verbindungsstege (34) angeordnet ist.

8. Beleuchtungsvorrichtung nach einem der vorherigen Ansprüche,
**dadurch gekennzeichnet, dass** die erste innere Oberfläche (24) eine Wölbung (C) aufweist.

9. Beleuchtungsvorrichtung nach Anspruch 8,
**dadurch gekennzeichnet, dass** die Wölbung (C) veränderbar ist.

10. Beleuchtungsvorrichtung nach einem der vorherigen Ansprüche,
**dadurch gekennzeichnet, dass** die erste innere Oberfläche (24) zur zweiten inneren Oberfläche (26) hin und von dieser weg bewegbar ist.

11. Beleuchtungsvorrichtung nach einem der vorherigen Ansprüche,
**dadurch gekennzeichnet, dass** das zweite Tragelement (18) eine vom ersten Tragelement (12) wegweisende äußere Oberfläche (27) aufweist, auf welcher eine transparente Beschichtung (32) aufgebracht ist.

12. Beleuchtungsvorrichtung nach einem der vorherigen Ansprüche,
**dadurch gekennzeichnet, dass** das erste Tragelement (12) und das zweite Tragelement (18) aus einem spritzgussfähigen Kunststoff bestehen.

13. Beleuchtungsvorrichtung nach Anspruch 12,
**dadurch gekennzeichnet, dass** der Kunststoff eingefärbt und/oder getönt ist.

14. Externes Verkleidungsbauteil für ein Personen- und/oder Gütertransportmittel (54), umfassend zumindest eine Beleuchtungsvorrichtung (10) nach einem der vorherigen Ansprüche.

15. Personen- und/oder Gütertransportmittel (54), umfassend zumindest ein externes Verkleidungsbauteil (56) nach Anspruch 14 und/oder zumindest eine Beleuchtungsvorrichtung (10) nach einem der Ansprüche 1 bis 13.

## Claims

1. Lighting device (10) for a means of passenger and/or freight transport (54), comprising
- a first support element (12),
- a transparent, second support element (18), which is connected to the first support element (12), forming a hollow space (20), and
- at least one light source (22) for providing light in the hollow space (20), wherein
- the first support element (12) comprises a first inner surface (24), which faces the second support element (18), and
- the second support element (18) comprises a second inner surface (26), which faces the first support element (12),
- the first inner surface (24) is reflective or a reflective coating (28) is applied on the first inner surface (24), and
- a partially reflective, transparent coating (30) is applied on the second inner surface (26)
**characterized in that** the first inner surface (24) is rotatable, for the purpose of which at least a part of the first support element is rotatably mounted and is rotated by means of an actuator.

2. Lighting device in accordance with claim 1,
**characterized in that** the light source (22) is arranged in the hollow space (20).

3. Lighting device in accordance with claim 1,
**characterized in that** the light source (22) is arranged outside of the hollow space (20) and **in that** the lighting device (10) comprises an introduction segment (38) for introducing the light generated by the light source (22) into the hollow space (20).

4. Lighting device in accordance with claim 3,
**characterized in that** the introduction segment (38) is implemented as a perforation (42) in the first support element (12).

5. Lighting device in accordance with claim 3,
**characterized in that** the introduction segment (38) is implemented as a light guide (40).

6. Lighting device in accordance with any of the preceding claims,
**characterized in that** numerous connection bridges (34) are arranged in the hollow space (20), by means of which the first support element (12) is connected to the second support element (18).

7. Lighting device in accordance with claim 6
**characterized in that** at least one light source (22) is arranged on one of the connection bridges (34).

8. Lighting device in accordance with any of the preceding claims,
**characterized in that** the first inner surface (24) comprises a curvature (C).

9. Lighting device in accordance with claim 8,
**characterized in that** the curvature (C) can be modified.

10. Lighting device in accordance with any of the preceding claims,
**characterized in that** the first inner surface (24) can be moved towards and away from the second inner surface (26).

11. Lighting device in accordance with any of the preceding claims,
**characterized in that** the second support element (18) comprises an outer surface (27) which faces away from the first support element (12) and on which a transparent coating (32) is applied.

12. Lighting device in accordance with any of the preceding claims,
**characterized in that** the first support element (12) and the second support element (18) are comprised of an injection moldable plastic.

13. Lighting device in accordance with claim 12,
**characterized in that** the plastic is colored and/or tinted.

14. External cladding component for a means of passenger and/or freight transport (54), comprising at least one lighting device (10) in accordance with any of the preceding claims.

15. Means of passenger and/or freight transport (54), comprising at least one external cladding component (56) in accordance with claim 14 and/or at least one lighting device (10) in accordance with any of claims 1 to 13.

## Revendications

1. Dispositif d'éclairage (10) pour un moyen de transport de personnes et/ou de marchandises (54) comprenant :
- un premier élément de support (12),
- un second élément de support (18), transparent, relié au premier élément de support (12) en formant une cavité (20), et
- au moins une source lumineuse (22) pour générer de la lumière dans la cavité (20),
dispositif dans lequel
- le premier élément de support (12) a une première surface intérieure (24) tournée vers le second élément de support (18), et
- le second élément de support (18) a une seconde surface intérieure (26) orientée vers le premier élément de support (12),
- la première surface intérieure (24) est réfléchissante ou encore un revêtement réfléchissant (28) est appliqué sur la première surface intérieure (12), et
- un revêtement transparent, partiellement réfléchissant (30) est appliqué sur la seconde surface intérieure (26),
dispositif **caractérisé en ce que**
la première surface intérieure (24) est rotative, et pour cela, au moins une partie du premier élément de support est monté à rotation en étant entraîné par un actionneur.

2. Dispositif d'éclairage selon la revendication 1,
**caractérisé en ce que**
la source lumineuse (22) est dans la cavité (20).

3. Dispositif d'éclairage selon la revendication 1,
**caractérisé en ce que**
la source lumineuse (22) est à l'extérieur de la cavité (20) et le dispositif d'éclairage (10) comporte un segment de guide d'entrée (38) pour diriger la lumière de la source lumineuse (22) dans la cavité (20).

4. Dispositif d'éclairage selon la revendication 3,
**caractérisé en ce que**
le segment de guide d'entrée (38) est constitué par un passage (42) dans le premier élément de support (12).

5. Dispositif d'éclairage selon la revendication 3,
**caractérisé en ce que**
le segment de guide d'entrée (38) est un guide de lumière (40).

6. Dispositif d'éclairage selon l'une des revendications précédentes, **caractérisé en ce que**
un certain nombre d'entretoises de liaison (34) sont prévues dans la cavité (20), ces entretoises reliant le premier élément de support (12) au second support (18).

7. Dispositif d'éclairage selon la revendication 6,
**caractérisé en ce que**
au moins une source lumineuse (22) est prévue pour l'une des entretoises de liaison (34).

8. Dispositif d'éclairage selon l'une des revendications précédentes, **caractérisé en ce que**
la première surface intérieure (24) a une bombure (C).

9. Dispositif d'éclairage selon la revendication 8,
**caractérisé en ce que**
la bombure (C) est variable.

10. Dispositif d'éclairage selon l'une des revendications précédentes, **caractérisé en ce que**
la première surface (24) est mobile en écartement par rapport à la seconde surface intérieure (26).

11. Dispositif d'éclairage selon l'une des revendications précédentes,
**caractérisé en ce que**
le second élément de support (18) a une première surface extérieure (27) non tournée vers le premier élément de support (12) et qui est munie d'un revêtement transparent (32).

12. Dispositif d'éclairage selon l'une des revendications précédentes,
**caractérisé en ce que**
le premier élément de support (12) et le second élément de support (18) sont en une matière plastique susceptible d'être injectée.

13. Dispositif d'éclairage selon la revendication 12,
**caractérisé en ce que**
la matière plastique est en couleur et/ou teintée.

14. Composant d'habillage externe pour un moyen de transport de personnes et/ou de marchandises (54) comprenant un dispositif d'éclairage (10) selon l'une des revendications précédentes.

15. Moyen de transport de personnes et/ou de marchandises (54) comprenant au moins un composant d'habillage externe (56) selon la revendication 14 et/ou un dispositif d'éclairage (10) selon l'une des revendications 1 à 13.
